# EUROPÄISCHE PATENTANMELDUNG

(11) **EP 1 271 909 A2**
(43) Veröffentlichungstag der Anmeldung: **02.01.2003**
(21) Anmeldenummer: 02013823.6
(22) Anmeldetag: 21.06.2002
(51) Int. Cl.: H04M 3/533

(54) **Telekommunikationsanlage und Betriebsverfahren einer solchen mit Nachrichtenein-/-ausgabe über ein angeschlossenes Endgerät**

(30) Priorität: 21.06.2001 DE 10130089
(71) Anmelder: Tenovis GmbH & Co. KG, 60326 Frankfurt am Main (DE)
(72) Erfinder: Schmidt, Thorsten, 61118 Bad Vibel (DE)
(74) Vertreter: Heinze, Ekkehard, Dipl.-Phys. Dr.

(57) **Zusammenfassung**

Betriebsverfahren einer Telekommunikationsanlage mit Nachrichtenein-/-ausgabe über ein angeschlossenes Endgerät, bei dem eine im E-Mail-Format empfangene Nachricht in einem Konvertierungs-Softwaremodul der Anlagensoftware in ein proprietäres Nachrichtenformat konvertiert, an das Endgerät übermittelt und angezeigt, angesagt oder ausgedruckt oder eine am Endgerät eingegebene Nachricht im proprietären Nachrichtenformat an die Telekommunikationsanlage übermittelt, in dem Konvertierungs-Softwaremodul in das E-Mail-Format konvertiert und in diesem in ein IP-Netz versandt wird, an das die Telekommunikationsanlage angeschlossen ist.

## Beschreibung

Die Erfindung betrifft ein Betriebsverfahren einer TK-Anlage nach dem Oberbegriff des Anspruchs 1 sowie eine zur Durchführung dieses Verfahrens ausgebildete Anlage.

Moderne, komfortable Telekommunikationsanlagen - speziell Nebenstellenanlagen - unterscheiden sich von älteren Anlagen ganz wesentlich durch differenzierte Benachrichtigungs-Optionen. Hiermit soll den angeschlossenen Nutzern, beispielsweise Mitarbeitern einer Firma, Behörde oder anderen öffentlichen Einrichtung oder Hotelgästen, ein vergleichbares Leistungsspektrum geboten werden, wie diese es als private Nutzer eines Mobiltelefons oder eines an das Internet angeschlossenen PC gewöhnt sind. So ermöglicht es eine TK-Anlage des Typs Integral 1/3/5 der Anmelderin den angeschlossenen Teilnehmern, mittels des Leistungsmerkmals Mitteilung Nachrichten an einen anderen Teilnehmer oder während ihrer Abwesenheit an einen rufenden Teilnehmer zu versenden. Das Leistungsmerkmal ist, wie bei anderen TK-Anlagen auch, aufgrund eines proprietären Protokolls realisierbar.

Der Erfindung liegt die Aufgabe zugrunde, ein Betriebsverfahren sowie eine entsprechend ausgebildete TK-Anlage bereitzustellen, welche eine Nachrichtenübermittlung an angeschlossene Teilnehmer von außerhalb bzw. von intern nach außen mit im wesentlichen allen Möglichkeiten gewährleistet, wie sie aufgrund der Verbindung zu IP-Netzen heute für Nutzer von direkt an ein TK-Netz angeschlossenen Endgeräten bestehen.

Diese Aufgabe wird durch ein Betriebsverfahren mit den Merkmalen des Anspruchs 1 sowie eine TK-Anlage mit den Merkmalen des Anspruchs 5 gelöst.

Die Erfindung schließt den wesentlichen Gedanken ein, den Teilnehmern der TK-Anlage die Möglichkeit zur externen Kommunikation via E-Mail zu erschließen. Die E-Mail hat sich im letzten Jahrzehnt zu einem universellen neuartigen Kommunikationsmittel entwickelt, welches die Bereiche der privaten und geschäftlichen Kommunikation tiefgreifend verändert hat und zu großen Teilen beherrscht - ungeachtet der noch immer großen Bedeutung von Briefen sowie Sprach- und Faxnachrichten sowie der SMS auf dem Gebiet der mobilen Kommunikation. Die vorgeschlagene Lösung bietet daher den wesentlichen Vorteil, daß routinierten Nutzern von IP-Sätzen über die TK-Anlage eine ihnen vertraute, flexible und effiziente Art des Nachrichtenverkehrs erschlossen wird, die die bisher gebotenen Möglichkeiten der Sprach-Fax-eingeschränkten Textkommunikation (gemäß proprietären Protokollen) wesentlich erweitert.

Diese Erweiterung wird durch ein spezielles Softwaremodul der Anlagensoftware (Vermittlungssoftware) realisiert, welches die Konvertierung aus dem E-Mail-Format in ein proprietäres Nachrichtenformat der Anlage oder umgekehrt und bevorzugt in beide Richtungen ausführt. Die konkrete Programmstruktur ist natürlich abhängig von dem proprietären Nachrichtenformat, das heißt von der Anlagensoftware als solcher.

Die E-Mails werden in das bzw. aus dem Internet über einen externen Mail-Server verschickt bzw. empfangen; analog ist eine E-Mail-Kommunikation aber auch im Zusammenwirken der TK-Anlage mit einem firmeneigenen Mail-Server eines Intranet möglich.

Für die Ausgabe empfangener E-Mails an den an die TK-Anlage angeschlossenen TK-Endgeräten bestehen in Abhängigkeit von deren konkreter Hardware-Ausstattung verschiedene Möglichkeiten:

Zum einen ist bei mit entsprechenden alphanumerischen Anzeigeeinheiten ausgestatteten Endgeräten eine Ausgabe als optische Anzeige auf dem Display des Endgerätes möglich. Alternativ oder u.U. auch zusätzlich hierzu besteht die Möglichkeit einer Sprachausgabe der im E-Mail-Format empfangenen Textnachricht nach einer Text-Sprache-Wandlung, die bevorzugt in einem zentralen Sprachsynthesizer der TK-Anlage ausgeführt wird. Ein besonderer Vorteil dieser Variante besteht darin, daß sie auch bei einfachen Endgeräten funktioniert, die überhaupt kein Display oder nur eine einfache Anzeigeinheit haben, welche für die Darstellung längerer Textnachrichten ungeeignet ist.

Eine dritte Möglichkeit - die insbesondere für Hotels sinnvoll sein kann - besteht im Ausdruck der konvertierten E-Mails über einen angeschlossenen Drucker. Auch diese Variante eignet sich natürlich für Anlagen, deren Endgeräte kein oder nur ein sehr einfaches Display besitzen. Während die Endgeräte selbst im Normalfall über einen S₀-Port an die Anlage angeschlossen sein werden, sind Drucker zur Druckausgabe der konvertierten E-Mails über ein V.24- oder anderes standardisiertes Drucker-Interface angeschlossen.

In ähnlicher Weise gibt es für die Eingabe von als E-Mail zu versendenden Nachrichten an den Endgeräten der TK-Anlage verschiedene Möglichkeiten in Abhängigkeit von der Hardware-Ausstattung der Endgeräte. Handelt es sich um Endgeräte mit alphanumerischer Tastatur - entweder in Art einer Computertastatur oder in Art einer Mobiltelefon-Tastatur mit Mehrfachbelegung der Zifferntasten - so ist eine Texteingabe über diese Tastatur ohne weiteres möglich. Alternativ hierzu können die Endgeräte mit einem Touchscreen ausgestattet sein, der - in Art bekannter Handheld-PCs - eine handschriftliche Eingabe oder auch eine Tastenfeld-Eingabe auf einer im Touchscreen dargestellten Tastatur ermöglicht.

In einer für die Nutzer besonders bequemen Ausführung mit erheblichen Zukunftsaussichten ist eine Spracheingabe über die Sprechkapsel der Endgeräte mit anschließender Spracherkennung (Sprache-Text-Wandlung) vorgesehen.

Ein Spracherkenner kann grundsätzlich in den Endgeräten selbst implementiert sein. Bevorzugt ist jedoch die zentrale Implementierung eines hochleistungsfähigen Spracherkenners mit hoher Speicher- und Prozessorkapazität in der TK-Anlage selbst. Die Nachrichten werden in dieser Ausführung als normale Sprachnachrichten (mit entsprechender Kennzeichnung der gewünschten Absendung als E-Mail) zur Anlage übertragen und dort nach der Sprache-Text-Wandlung in das E-Mail-Format konvertiert.

In einer weiteren bevorzugten Ausgestaltung der vorgeschlagenen Lösung werden die empfangenen und/oder die versandten Nachrichten im proprietären Nachrichtenformat der Anlage zentral gespeichert und ggf. auch in diesem Format verwaltet. Dies ermöglicht die Nutzung etablierter Speicher- und Speicherverwaltungsstrukturen. Im Interesse einer weiteren Gebrauchswerterhöhung für die angeschlossenen Teilnehmer ist aber auch eine Verwaltung der Nachrichten mittels eines standardisierten E-Mail-Verwaltungsprogrammes (beispielsweise von Microsoft-Outlook oder entsprechenden Netscape- oder Linux-Programmen) möglich. Diese Variante erlaubt eine besonders einfache nutzergesteuerte Verwaltung auch bei zentraler Speicherung.

Vorteile und Zweckmäßigkeiten der Erfindung ergeben sich im übrigen aus den Unteransprüchen sowie der nachfolgenden Beschreibung zweier bevorzugter Ausführungen anhand der Figuren. Von diesen zeigen:
- Fig. 1: eine schematische Darstellung der im Zusammenhang mit der Ausführung der Erfindung wesentlichen Komponenten einer Nebenstellenanlage gemäß einer ersten Ausführungsform der Erfindung in Art eines Funktions-Blockschaltbildes und
- Fig. 2: eine modifizierte Darstellung einer durch Mittel zur Sprachsteuerung und -synthese erweiterten Anlagenkonfiguration gemäß einer zweiten Ausführungsform.

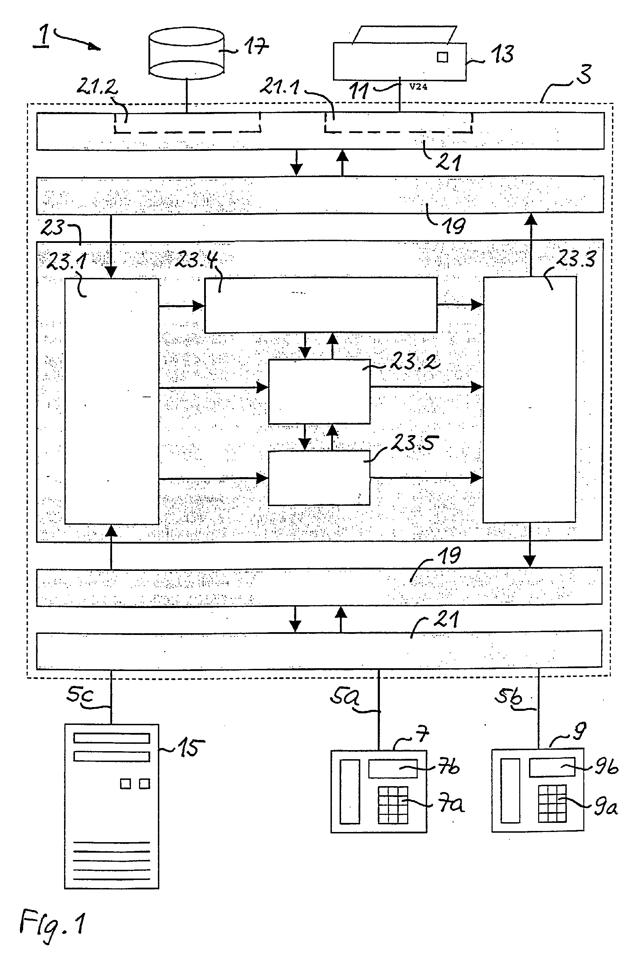

Fig. 1 zeigt eine private Nebenstellenanlage (PABX) 1 mit einer TK-Anlage (Zentrale) 3, zwei über S₀-Ports 5a, 5b angeschlossenen Endgeräten (Nebenstellen) 9a, 9b und einem über ein V.24-Interface angeschlossenen Drucker 13, die über einen weiteren S₀-Port 5c mit einem externen Mail-Server 15 verbunden ist.

An die TK-Anlage 3 ist ein Nachrichtenspeicher 17 zur Speicherung der ein- und ausgehenden Nachrichten angeschlossen. Die Endgeräte 7, 9 haben jeweils eine alphanumerische Tastatur 7a, 9a mit Mehrfachtastenbelegung, die zur Texteingabe geeignet ist, sowie ein mehrzeiliges Matrix-LCD 7b, 9b, welches zur Anzeige von Textnachrichten geeignet ist. Bei dem Endgerät 7 handelt es sich um ein ISDN-Terminal, welches aufgrund des EDSS1-Protokolls mit der Anlage verbunden ist, während das Endgerät 9 ein Systemterminal ist, dessen Verbindung zu der Anlage auf einem proprietären Protokoll derselben basiert.

In der TK-Anlage 3 sind ein Betriebssystem 19, eine Peripheriesoftware 21 und eine Vermittlungssoftware 23 implementiert, welche zusammen auch als Anlagensoftware (im weiteren Sinne) zu verstehen sind und proprietären Charakter haben. Die Vermittlungssoftware 23 umfaßt - neben weiteren - die in der Figur dargestellten Module Meldungsanalyse 23.1 und Mitteilung 23.2, mit denen die Kommunikation von Daten 23.4 zwischen den Einund Ausgängen (im Zusammenwirken mit dem Betriebssystem 19 und der Peripheriesoftware 21) gehandhabt wird.

Im Zusammenhang mit der Erfindung wesentlich ist ein zusätzliches Modul E-Mail-Konverter 23.5, welches bidirektional mit dem Modul Mitteilung 23.2 sowie eingangsseitig mit dem Modul Mitteilungsanalyse 23.1 und ausgangsseitig mit dem Modul Befehlsausgabe 23.3 zusammenwirkt. Das Modul E-Mail-Konverter 23.5 führt einerseits eine Umformatierung von über den Mail-Server 15 empfangenen E-Mails in das proprietäre Nachrichtenformat der Anlage zur Weiterleitung an die Nebenstelle 9 und andererseits eine Umformatierung der von dieser im proprietären Nachrichtenformat erhaltenen Textmitteilungen in das E-Mail-Format für den Versand nach außerhalb der Anlage über den E-Mail-Server durch. Die Konvertierung empfangener E-Mails wirkt auch für die Übertragung zum Drucker 13 über das V.24-Interface 11 und an den Nachrichtensprecher 17, so daß also empfangene E-Mails dort im proprietären Nachrichtenvorrat gespeichert werden. Dementsprechend haben auch eine Druckeransteuerungs-Software 21.1 und eine Nachrichtenverwaltungs-Software 21.2 als Komponenten der Peripherie-Software 21 proprietären Charakter.

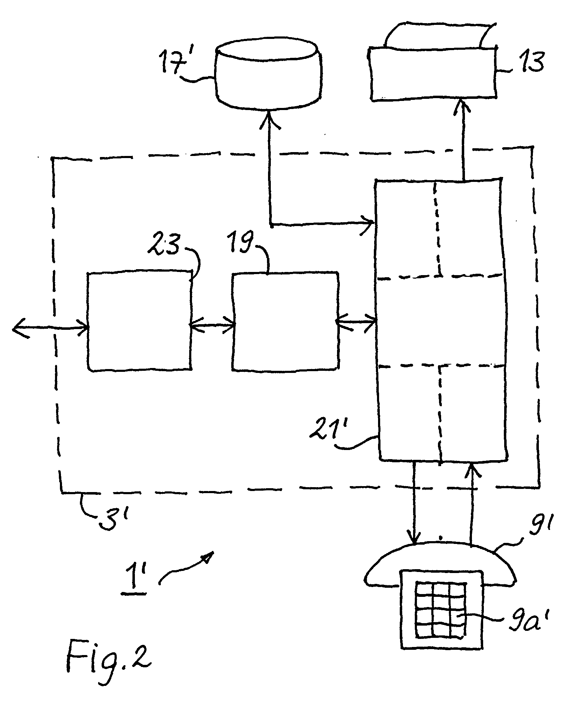

Fig. 2 ist eine schematische Darstellung einer modifizierten Nebenstellenanlage 1', bei der einige Komponenten gegenüber der Darstellung in Fig. 1 fortgelassen sind und bei der die Hardware des Systemterminals 9' sowie die Peripheriesoftware 21' der TK-Anlage (Zentrale) 3' wesentliche Unterschiede zur Ausführung nach Fig. 1 aufweisen: Das System Terminal 9' ist hier als Low-Cost-Endgerät ohne Display und mit vereinfachter Ziffern- und Funktionstastatur 9a' ausgeführt. Dafür umfaßt die Peripheriesoftware 21' der TK-Anlage 3' zusätzliche Module Spracherkennung 21.3 und Text-Sprache-Wandlung (Text-to-Speech) 21.4, und die Nachrichtenverwaltungs-Software 21.2' ist hier als weitgehend standardisiertes E-Mail-Verwaltungsprogramm ausgeführt.

Diese modifizierte Ausführung ermöglicht den angeschlossenen Teilnehmern eine einfache, schnelle und komfortable Eingabe von zu versendenden Nachrichten über die Sprechkapsel und zugleich eine nutzerorientierte Verwaltung der versandten und empfangenen E-Mails ebenfalls per Sprachsteuerung.

Die Ausführung der Erfindung ist nicht auf die oben beschriebenen Beispiele und hervorgehobenen Aspekte beschränkt, sondern ebenso in einer Vielzahl von Abhandlungen möglich, die im Rahmen fachgemäßen Handelns liegen.

### Bezugszeichenliste

- 1; 1': Nebenstellenanlage
- 3; 3': TK-Anlage (Zentrale)
- 5a, 5b, 5c: S₀-Port
- 7, 9, 9': Endgerät (Nebenstelle)
- 7a, 9a: alphanumerische Tastatur
- 7b, 9b: Matrix-LCD
- 9a': Ziffern- und Funktionstasten
- 11: V.24-Interface
- 13: Drucker
- 15: Mail-Server
- 17; 17': Nachrichtenspeicher
- 19: Betriebssystem
- 21; 21': Peripheriesoftware
- 21.1: Druckeransteuerungs-Software
- 21.2; 21.2': Nachrichtenverwaltungs-Software
- 21.3: Modul Spracherkennung
- 21.4: Modul Text-Sprache-Wandlung
- 23: Vermittlungssoftware
- 23.1: Modul Meldungsanalyse
- 23.2: Modul Mitteilung
- 23.3: Modul Befehlsangabe
- 23.4: Daten
- 23.5: Modul E-Mail-Konverter

## Patentansprüche

1. Betriebsverfahren einer Telekommunikationsanlage mit Nachrichtenein-/-ausgabe über ein angeschlossenes Endgerät,
**dadurch gekennzeichnet, daß**
eine im E-Mail-Format empfangene Nachricht in einem Konvertierungs-Softwaremodul der Anlagensoftware in ein proprietäres Nachrichtenformat konvertiert, an das Endgerät übermittelt und angezeigt, angesagt oder ausgedruckt oder
eine am Endgerät eingegebene Nachricht im proprietären Nachrichtenformat an die Telekommunikationsanlage übermittelt, in dem Konvertierungs-Softwaremodul in das E-Mail-Format konvertiert und in diesem in ein IP-Netz versandt wird, an das die Telekommunikationsanlage angeschlossen ist.

2. Betriebsverfahren nach Anspruch 1,
**dadurch gekennzeichnet, daß**
die empfangene Nachricht einer Text-Sprache-Wandlung unterzogen und als Sprachnachricht ausgegeben oder
die Nachricht als Sprachnachricht am Endgerät eingegeben und anschließend, insbesondere in der Telekommunikationsanlage, mittels Spracherkennung in eine Textnachricht umgewandelt wird.

3. Betriebsverfahren nach Anspruch 1 oder 2,
**dadurch gekennzeichnet, daß**
die empfangene und/oder versandte Nachricht in der Telekommunikationsanlage bzw. einem an diese angeschlossenen Nachrichtenspeicher als Textnachricht im proprietären Nachrichtenformat gespeichert wird.

4. Betriebsverfahren nach einem der vorangehenden Ansprüche,
**dadurch gekennzeichnet, daß**
im E-Mail-Format empfangene Nachrichten durch ein E-Mail-Verwaltungsprogramm, insbesondere zentral, verwaltet werden.

5. Telekommunikationsanlage zur Durchführung des Verfahrens nach einem der Ansprüche 1 bis 4,
**dadurch gekennzeichnet, daß**
die Anlagensoftware ein Konvertierungs-Softwaremodul zur Konvertierung einer im E-Mail-Format empfangenen Nachricht in ein proprietäres Nachrichtenformat und/oder einer an einem Endgerät der Anlage eingegebenen Nachricht aus dem proprietären Nachrichtenformat in das E-Mail-Format aufweist.

6. Telekommunikationsanlage nach Anspruch 5,
**gekennzeichnet durch**
einen Nachrichtenspeicher zur Speicherung der empfangenen und/oder abgesandten Nachricht als Textnachricht im proprietären Nachrichtenformat.

7. Telekommunikationsanlage nach Anspruch 5 oder 6,
**gekennzeichnet durch**
über einen S₀-Port angeschlossene Endgeräte mit alphanumerischer Anzeigeeinheit zur optischen Anzeige der konvertierten Nachricht.

8. Telekommunikationsanlage nach Anspruch 5 oder 6,
**gekennzeichnet durch**
eine zentrale Sprachsyntheseeinheit zur Text-Sprache-Wandlung empfangener Nachrichten.

9. Telekommunikationsanlage nach einem der Ansprüche 5 bis 8,
**gekennzeichnet durch**
mindestens einen, insbesondere über einen V.24-Schnittstelle angeschlossenen, Drucker zum Ausdruck der konvertierten Nachricht.

10. Telekommunikationsanlage nach einem der Ansprüche 5 bis 9,
**gekennzeichnet durch**
angeschlossene Endgeräte mit einer alphanumerischen Tastatur oder einem Touchscreen zur Texteingabe.

11. Telekommunikationsanlage nach einem der Ansprüche 5 bis 9,
**gekennzeichnet durch**
einen zentralen Spracherkenner zur Sprache-Text-Wandlung von an angeschlossenen Endgeräten eingesprochenen Nachrichten.

12. Telekommunikationsanlage nach einem der Ansprüche 5 bis 11,
**gekennzeichnet durch**
ein, insbesondere zentral implementiertes, E-Mail-Verwaltungsprogramm.
